Europäisches Patentamt

European Patent Office

Office européen des brevets

(11) Publication number: **0 367 731**
**A2**

## EUROPEAN PATENT APPLICATION

(21) Application number: **89830457.1**

(22) Date of filing: **24.10.89**

(51) Int. Cl.⁵: **B60J 10/04**

(30) Priority: **03.11.88 IT 5350588 U**

(43) Date of publication of application:
**09.05.90 Bulletin 90/19**

(84) Designated Contracting States:
**DE ES FR GB SE**

(71) Applicant: **FIAT AUTO S.p.A.**
**Corso Giovanni Agnelli 200**
**I-10135 Torino(IT)**

(72) Inventor: **Giraudo, Giampiero**
**Via San Giacomo 39/A**
**I-10092 Fornaci di Beinasco (Torino)(IT)**
Inventor: **Crepaldi, Graziano**
**Via Torino 68**
**I-10092 Beinasco (Torino)(IT)**

(74) Representative: **Notaro, Giancarlo et al**
**c/o Jacobacci-Casetta & Perani S.p.A. Via**
**Alfieri, 17**
**I-10121 Torino(IT)**

(54) **A device for guiding and sealing the vertically movable pane of a motor vehicle window.**

(57) A device for guiding and sealing the vertically movable pane (6) of a motor vehicle includes a sealing and guiding weather strip (8) of elastomeric material which is supported by a sheet-metal profile (9) with a substantially S-shaped cross-section having a first channel part (10) fitted on a flange (11) of the window frame (12) and a second channel part (13) intended to house the edge of the pane (6). A plastics element (17) is fitted to the rear edge of the pane (6) and has an edge which projects inwardly from the plane of the pane and cooperates with a lip (16) of the weather strip (8) to prevent the rear edge of the pane (6) from coming out of its guide channel.

FIG. 2

## A device for guiding and sealing the vertically movable pane of a motor vehicle window

The present invention relates to a device for guiding and sealing the vertically movable pane of a motor vehicle window, of the type in which the outer surface of the pane is substantially flush with the outer surface of the parts of the bodywork adjacent the pane.

The object of the invention is to produce a device of the type indicated above, which is easy to fit, enables good aerodynamic and aesthetic characteristics of the motor car to be achieved, and is functional and reliable.

In order to achieve this object, the subject of the invention is a device of the type indicated above, characterised by the combination of the following characteristics:

a) the device includes a sealing and guiding weather strip of viscoelastic material which is fitted along the front edge, the top edge and the rear edge of the window opening, the weather strip being supported by a sheet-metal profile with a substantially S-shaped cross-section having a first channel part fitted on a flange of the window frame and a second channel part intended to house the edge of the pane,

b) the weather strip completely covers the sheet-metal profile and is constituted by a single piece of elastomeric material formed by coextrusion with the sheet-metal profile,

c) the weather strip of elastomeric material has a softer portion situated in direct contact with the window frame, and a harder portion situated on the side of the sheet-metal profile which faces the pane and forming at least one lip which extends adjacent the edge of the pane.

d) a plastics element is fitted to the rear edge of the pane and has an edge which projects inwardly from the plane of the pane and cooperates with the lip of the weather strip to prevent the rear edge of the pane from coming out of its guide channel.

The plastics element may be produced by coextrusion with the pane or may be constituted by a separate element glued to the pane.

The invention will now be described with reference to the appended drawings, provided purely by way of non-limiting example, in which:

Figure 1 is a schematic view of the window of the front side door of a motor car,

Figures 2 and 3 are sections taken on the lines II-II and III-III of Figure 1, on an enlarged scale,

Figures 4 and 5 are variants of Figures 2 and 3, respectively,

Figure 6 shows a variant of Figure 5.

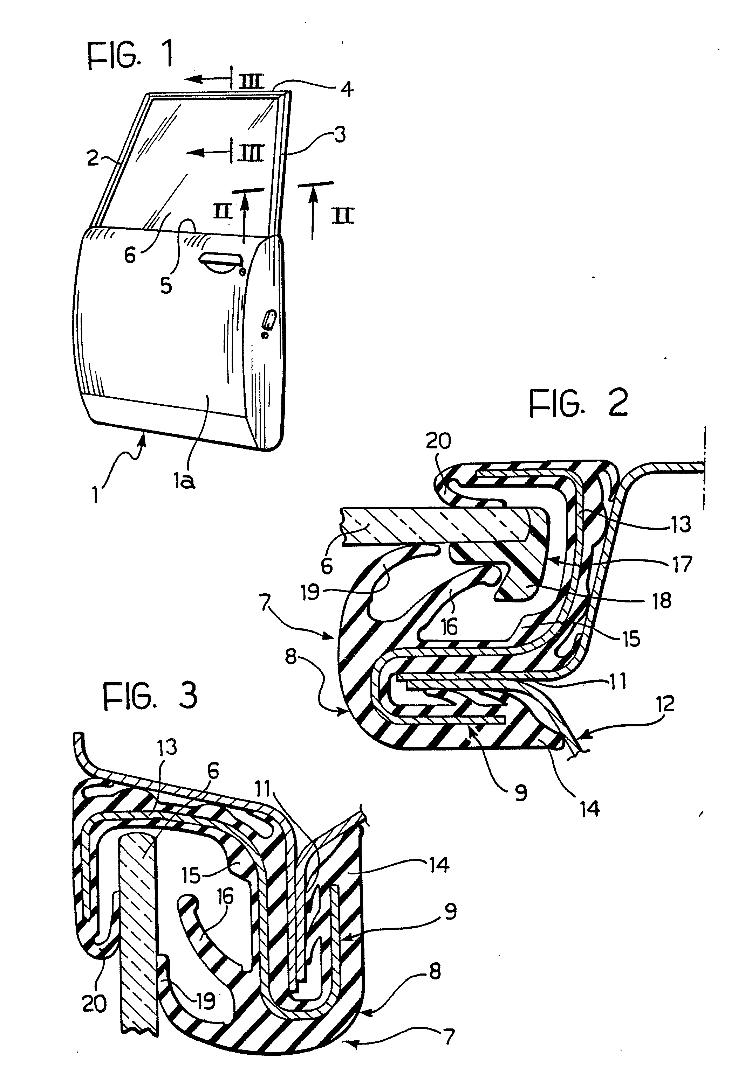

In Figure 1, a side door of a motor car is indicated 1 and includes a lower panel 1a, a front pillar 2. a rear pillar 3, and a cross member 4 which connects the top ends of the pillars 2 and 3 so as to define a window opening 5 in which a pane 6 is mounted for sliding.

The window is provided with a guiding and sealing device 7 including a weather strip 8 of elastomeric material supported by a sheet-metal profile 9. The profile 9 has a substantially S-shaped cross-section (Figures 2 and 3) with a first channel part 10 which is fitted over a flange 11 of the window frame 12 and a second channel part 13 which houses the edge of the pane 6. The weather strip 8 is constituted by a single piece of elastomeric material formed by extrusion with the sheet-metal profile 9. The weather strip 8 completely covers the profile 9 on both sides and has a softer portion 14 (indicated in the drawing by less dense hatching) in contact with the frame 12 and a harder portion 15 which covers the side of the channel part 13 facing the pane 6. The harder part 15 also forms a lip 16 which extends almost up to the edge of the pane 6. A plastics element 17 fixed to the rear edge of the pane 6 has a part 18 which projects inwardly from the plane of the panes and cooperates with the lip 16 to prevent the rear edge of the pane from coming out of its guide channel. The softer portion 14 also defines two lips 19, 20 which are in contact with the two major faces of the pane to ensure sealing.

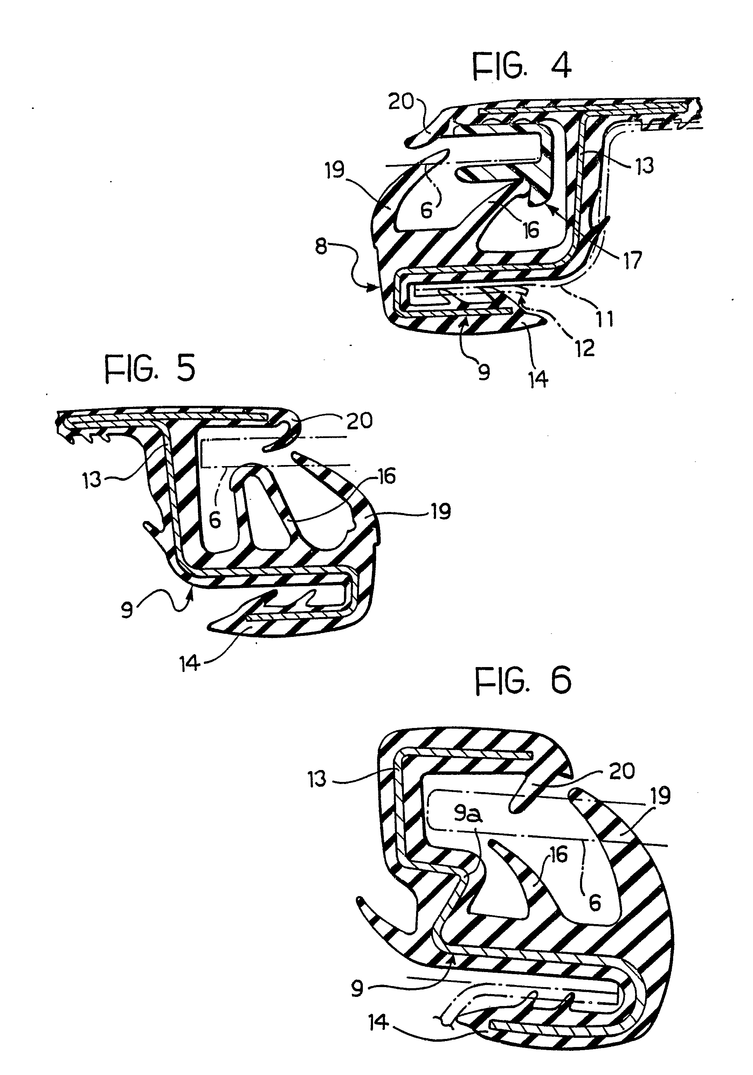

The element 17 may be produced by co-moulding with the pane 6 or may be constituted by a separate element (the variant shown in Figures 4 and 5) having a channel part which is fitted onto the edge of the pane and glued thereto.

Figure 6 shows a variant of Figure 5 which differs from the latter only as regards the shape of the sheet-metal profile 9, which forms a bend 9a in order to improve the guiding of the edge of the pane.

Naturally, the principle of the invention remaining the same, the details of construction may be varied widely with respect to those described and illustrated.

## Claims

1. A device for guiding and sealing the vertically movable pane (6) of a motor vehicle window in which the outer surface of the pane (6) is substantially flush with the outer surface of the parts of the bodywork adjacent the pane, characterised by the combination of the following characteristics:

a) the device includes a sealing and guiding weather strip (8) of elastomeric material which is fitted along the front edge, the top edge and the rear edge of the window opening (5), the weatherstrip (8) being supported by a sheet-metal profile (9) with a substantially S-shaped cross-section having a first channel part (10) fitted on a flange (11) of the window frame (12) and a second channel part (13) intended to house the edge of the pane (6),

b) the weatherstrip (8) completely covers the sheet-metal profile (9) and is constituted by a single piece of elastomeric material formed by coextrusion with the sheet-metal profile (9),

c) the weather strip (8) of elastomeric material has a softer portion (14) situated in direct contact with the window frame (12), and a harder portion (15) situated on the side of the sheet-metal profile (9) which faces the pane (6) and forming at least one lip (16) which extends adjacent the edge of the pane (6),

d) a plastics element (17) is fitted to the rear edge of the pane (6) and has an edge which projects inwardly from the plane of the pane and cooperates with the lip (16) of the weather strip (8) to prevent the rear edge of the pane (6) from coming out of its guide channel.

2. A device according to Claim 1, characterised in that the element (17) of viscoelastic material is produced by co-moulding with the pane (6).

3. A device according to Claim 1, characterised in that the element (17) is glued to the edge of the pane (6).

4. A device according to Claim 1, characterised in that the substantially S-shaped section of the sheet-metal profile (9) forms a bend (9a) in the region adjacent the edge of the pane (6).

FIG. 1

FIG. 2

FIG. 3

FIG. 4

FIG. 5

FIG. 6